# EUROPÄISCHE PATENTSCHRIFT

(11) **EP 2 815 143 B1**
(45) Veröffentlichungstag und Bekanntmachung des Hinweises auf die Patenterteilung: **15.03.2017**
(21) Anmeldenummer: 13700771.2
(22) Anmeldetag: 22.01.2013
(51) Int. Cl.: F16C 33/62, F16C 33/58

(54) **WÄLZLAGER**
ANTI-FRICTION BEARING
PALIER À ROULEMENT

(30) Priorität: 14.02.2012 DE 102012202155
(43) Veröffentlichungstag der Anmeldung: 24.12.2014
(73) Patentinhaber: Schaeffler Technologies AG & Co. KG, 91074 Herzogenaurach (DE)
(72) Erfinder: HOSENFELDT, Tim Matthias, 90480 Nürnberg (DE); GIERL, Jürgen, 91052 Erlangen (DE); MUSAYEV, Yashar, 90419 Nürnberg (DE)
(86) Internationale Anmeldenummer: PCT/EP2013/051126
(87) Internationale Veröffentlichungsnummer: WO 2013/120667

(56) Entgegenhaltungen:
- DE-A1- 4 243 450
- DE-A1-102008 024 055

## Beschreibung

Die Erfindung betrifft ein Wälzlager, umfassend einen metallenen Außenring und einen metallenen Innenring mit jeweiligen Wälzkörperlaufbahnen, sowie mehrere auf diesen Wälzkörperlaufbahnen wälzende metallene Wälzkörper.

### Hintergrund der Erfindung

Derartige Wälzlager kommen in unterschiedlichsten Gebieten zur Anwendung, unter anderem auch in stromführenden oder stromerzeugenden Anwendungen wie z. B. Elektromotoren, wo beispielsweise der Läufer wälzgelagert ist. Bei solchen Anwendungen besteht die Gefahr eines elektrischen Stromdurchgangs zwischen Innen- und Außenring, der zu Wälzlagerlaufbahnschäden führt und eine Reduzierung der Lagerlebensdauer bewirkt. Zwar ist es bekannt, die Lagerkomponenten durch Aufbringen zusätzlicher dicker Schichten zwischen Lagersitz und Außenring elektrisch zu isolieren, wozu beispielsweise gemäß DE 690 16 321 T2 an der Außenseite des Lagerrings eine Kunststoffisolierschicht aufgebracht wird. Gerade bei kleineren Lagergrößen sind hiermit jedoch relativ beachtliche Mehrkosten verbunden, gemessen an der geforderten Isolationsklasse. Ferner dient diese Isolation lediglich zu diesem Zweck, Maßnahmen betreffend einer Verbesserung der tribologischen Eigenschaft oder den Verschleißschutz sind zusätzlich zu treffen. Die DE 10 2008 024 055 A1 offenbart einen Lagerring sowie ein Lager mit funktionsbezogenem Werkstoffverbund. Es werden Lagerringe für Wälzlager beschrieben, die aus einem Trägerring mit einem Funktionsring, der eine Randschicht im Bereich der Laufbahnen der Wälzkörper aufweist, bestehen. Als Randschicht sind dabei bruchzähe Keramik-, Metallkarbid- oder diamantartige Kohlenstoff-Schichten offenbart.

### Zusammenfassung der Erfindung

Der Erfindung liegt damit das Problem zugrunde, ein Wälzlager anzugeben, das einerseits hinreichend isoliert, andererseits aber auch hinsichtlich der tribologischen Eigenschaften und/oder des Verschleißschutzes verbessert ist.

Zur Lösung dieses Problems ist bei einem Wälzlager der eingangs genannten Art erfindungsgemäß vorgesehen, dass am Außenring und/oder am Innenring laufbahnseitig und/oder an den Wälzkörpern eine elektrische Isolationsschicht vorgesehen ist.

Bei dem erfindungsgemäßen Wälzkörper ist mit besonderem Vorteil die elektrische Isolationsschicht unmittelbar im Wälzbereich vorgesehen, wird also auch mechanisch beansprucht. Die Isolationsschicht kann entweder laufbahnseitig am Außenring und/oder am Innenring vorgesehen sein, wobei die Anordnung nur an einem der Ringe im Hinblick auf die Isolation bereits ausreichend ist. Das heißt, dass am Außenring die Innenumfangsfläche respektive am Innenring seine Außenumfangsfläche mit einer solchen Isolationsschicht versehen ist. Alternativ oder zusätzlich können auch die Wälzkörper außenseitig mit einer Isolationsschicht belegt sein, was gleichermaßen für eine hinreichende elektrische Isolation sorgt, wie aber auch hier die Isolationsschicht selbst wälzend beansprucht wird. Durch entsprechende Ausgestaltung der Isolationsschicht respektive entsprechende Materialienwahl können darüber hinaus mit dieser Isolationsschicht auch tribologische Eigenschaftsverbesserungen und/oder ein Verschleißschutz erreicht werden, nachdem wie ausgeführt die Isolationsschicht ihrerseits im Lagerbetrieb mechanisch beansprucht wird.

Für eine hinreichende elektrische Isolation soll die Isolationsschicht einen Widerstand von > 200 MΩ aufweisen, je höher der Widerstand ist, umso besser. Daneben sollte die Durchschlagspannung, ab welcher es zum Durchschlag kommt, mindestens 200 V betragen.

Gemäß der Erfindung ist die Isolationsschicht aus einer Oxidkeramik, beispielsweise aus Al₂O₃, SiO₂, TiO₂ oder ZrO, wobei diese Aufzählung nicht abschließend ist. Diese Oxidkeramiken sind einerseits hervorragende elektrische Isolatoren, zum anderen zeigen sie auch hervorragende mechanische Eigenschaften, die insbesondere dem Verschleißschutz dienlich sind. Diese Oxidkeramikschichten lassen sich mit besonderem Vorteil aus der Gasphase abscheiden, beispielsweise mittels PVD- oder PACVD-Verfahren, können also hinreichend dünn und mit hoher Güte aufgebracht werden. Insbesondere in Folge der Gasphasenabscheidung können mit derartigen Oxidkeramikschichten auch gute tribologische Eigenschaften erzielt werden.

Zwischen dem metallenen Körper des Außenrings, des Innenrings und/oder des Wälzkörpers sowie der Isolationsschicht ist eine Haftvermittlerschicht vorgesehen, die für eine gute Anbindung der Isolationsschicht, der beschriebenen Oxidkeramikschicht, sorgt.

Eine solche Haftvermittlerschicht besteht aus einer Schicht aus einem Metall, einem Metallkarbid, einem Metallnitrid, einem Metallborid oder einem Metallsilizid, wobei sich natürlich die Wahl des verwendeten Haftvermittlerschichtmaterials nach dem aufzubringenden Isolationsschichtmaterial, der aufzubringenden Oxidkeramik, richtet.

Ferner kann, gegebenenfalls zusätzlich zur Haftvermittlerschicht, eine die Isolationsschicht belegende tribologische Deckschicht vorgesehen sein, die des Weiteren der Einstellung der tribologischen Eigenschaften dient. Diese Deckschicht kann eine metallhaltige wasserstoffhaltige amorphe Kohlenstoffschicht, eine metallfreie wasserstoffhaltige amorphe Kohlenstoffschicht oder eine modifizierte wasserstoffhaltige amorphe Kohlenstoffschicht sein, wobei auch diese Aufzählung nicht abschließend ist.

Insgesamt kann also das erfindungsgemäße Wälzlager einen mehrlagigen Schichtverbund aufweisen, bestehend aus einer Haftvermittlerschicht, einer Isolationsschicht sowie einer Deckschicht, so dass ein hinsichtlich der elektrischen Isolationseigenschaft, der tribologischen Eigenschaft wie auch der Verschleißfestigkeit optimiertes Schichtsystem unmittelbar im belasteten Wälzbereich vorgesehen ist.

Nachdem die Isolationsschicht bevorzugt aus der Gasphase abgeschieden wird, ist es natürlich zweckmäßig, wenn auch, sofern vorhanden, die Haftvermittlerschicht und die Deckschicht ebenfalls aus der Gasphase abgeschieden werden, bevorzugt mit dem gleichen Verfahren, so dass wenn möglich eine sukzessive Schichtausbildung in unmittelbar aneinander anschließenden Arbeitsgängen möglich ist.

Die Schichtdicke der Isolationsschicht sollte ≤ 15µm, insbesondere ≤ 10µm sein, was ohne weiteres insbesondere bei Ausbildung einer Oxidkeramikschicht, insbesondere aus der Gasphase, ohne weiteres möglich ist. Sind zusätzlich die Haftvermittlerschicht und/oder die Deckschicht vorgesehen, so sollte die Gesamtschichtdicke des Mehrlagen-Schichtverbunds ≤ 25µm, insbesonderer ≤ 20µm sein.

### Kurze Beschreibung der Zeichnung

Ein Ausführungsbeispiel der Erfindung ist in der Zeichnung dargestellt und wird im Folgenden näher beschrieben. Es zeigen:
- Figur 1: eine Schnittansicht durch ein erfindungsgemäßes Wälzlager, und
- Figur 2: eine vergrößerte geschnittene Teilansicht durch den innen beschichteten Außenring des Wälzlagers aus Figur 1.

### Ausführliche Beschreibung der Zeichnung

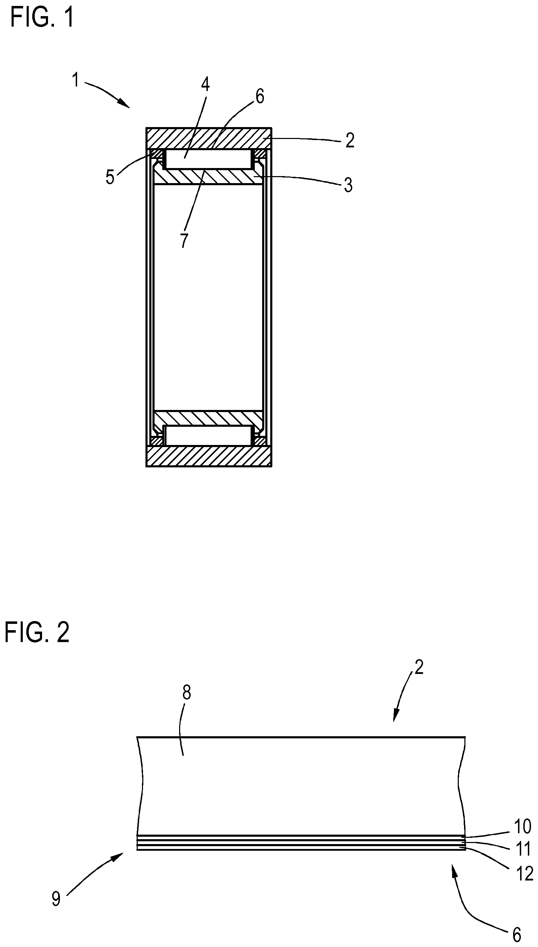

Figur 1 zeigt ein erfindungsgemäßes Wälzlager 1 in Form eines Radiallagers, bestehend aus einem Außenring 2, einem Innenring 3 sowie zwischen diesen angeordneten Wälzkörpern 4, die in einem Käfig 5 gehaltert sind. Der Außenring 2 weist eine Wälzkörperlaufbahn 6 und der Innenring eine Wälzkörperlaufbahn 7 auf, auf denen die in einem Käfig 5 gehaltenen Wälzkörper 4, hier in Form von Nadeln, wälzen.

Zumindest eine der beiden Wälzkörperlaufbahnen 6, 7 und/oder die Außenseite eines jeden Wälzkörpers 4 ist mit einer elektrischen Isolationsschicht ausgerüstet, die einen elektrischen Stromdurchgang vom Innenring 3 zum Außenring 2 oder umgekehrt verhindert und so das Lager vor Schäden durch über das Lager fließenden Strom schützt. Im gezeigten Beispiel sei angenommen, dass diese elektrische Isolationsschicht an der Wälzkörperlaufbahn 6 des Außenring 2 vorgesehen ist, wie in Figur 2 vergrößert dargestellt ist.

Figur 2 zeigt eine geschnittene Teilansicht des Außenrings 2, bestehend aus dem metallenen Körper 8 des Außenrings 2 sowie einem mehrlagigen Schichtsystem 9, das laufbahnseitig aufgebracht respektive vorgesehen ist.

Das gezeigte Schichtsystem 9 besteht zum einen aus einer Haftvermittlerschicht 10, die unmittelbar auf dem metallenen Körper 8 des Außenrings 2 aufgebracht ist. Diese Haftvermittlerschicht kann aus einem Metall, einem Metallkarbid, einem Metallnitrid, Metallborid oder Metallsilizid sein. Die konkrete Materialwahl richtet sich nach dem verwendeten Material der auf diese Haftvermittlerschicht 10 aufgebrachten elektrischen Isolationsschicht 11. Diese elektrische Isolationsschicht 11 ist extrem hochohmig, sie weist einen elektrischen Widerstand von > 200MΩ auf. Die Durchschlagspannung sollte wenigstens 200 V betragen. Bevorzugt handelt es sich hierbei um eine Oxidkeramikschicht, beispielsweise aus Al₂O₃, SiO₂, TiO₂ oder ZrO, wobei diese Aufzählung nicht abschließend ist. Die elektrische Isolationsschicht 11 kann natürlich auch eine mehrlagige Schicht sein, die aus mehreren Lagen aus verschiedenen der genannten Oxidkeramikmaterialien bestehen kann. Durch die elektrische Isolationsschicht 11 wird das Wälzlager 1 radial gesehen isoliert, so dass es zu keinem Stromdurchgang über das Lager kommt.

Die elektrische Isolationsschicht 11 ihrerseits ist mit einer tribologischen Deckschicht 12 belegt, beispielsweise aus einer metallhaltigen wasserstoffhaltigen amorphen Kohlenstoffschicht (a-C:H:Me), einer metallfreien wasserstoffhaltigen amorphen Kohlenstoffschicht (a-C:H) oder einer modifizierten wasserstoffhaltigen amorphen Kohlenstoffschicht (a-C:H), wobei auch diese Deckschicht eine Mischschicht respektive mehrlagige Schicht bestehend aus zwei oder mehreren dieser genannten Materialien sein kann. Auch diese Aufzählung ist nicht abschließend.

Das gesamte Schichtsystem 9 unterliegt der Wälzbeanspruchung, das heißt dass die Wälzkörper 4 unmittelbar auf diesem Schichtsystem 9 abwälzen. Über die tribologische Deckschicht 12 werden die tribologischen Eigenschaften des Schichtsystems 9, die sich unmittelbar auf das Wälzverhalten der Wälzkörper 4 auswirken, eingestellt. Die elektrische Isolationsschicht 11 erwirkt wie beschrieben die Stromisolation, während die Haftvermittlerschicht 10 für einen festen Verbund des Deckschichtsystems zum metallenen Körper 8 des Außenrings führt.

Die Gesamtschichtdicke des Schichtsystems 9 sollte ≤ 25µm, vorzugsweise ≤ 20µm, sein, wobei die Isolationsschicht 11 nicht dicker als 15 µm, vorzugsweise ≤ 10µm, sein sollte.

Die Isolationsschicht 12 wird bevorzugt aus der Gasphase abgeschieden, Gleiches gilt, sofern möglich, auch für die Haftvermittlerschicht 10 respektive die Deckschicht 12, sofern die konkret verwendeten Schichtmaterialien dies zulassen.

Wenngleich Figur 2 die Anordnung des Schichtsystems 9 am Außenring 2 beschreibt, ist es selbstverständlich denkbar, dieses Schichtsystem auch alternativ oder zusätzlich am metallenen Körper des Innenrings 3 vorzusehen, also an dessen Laufbahn 7. Natürlich können sowohl der Außenring 2 als auch der Innenring 3 mit einem solchen Schichtsystem belegt sein.

Alternativ oder zusätzlich können auch die Wälzkörper 4, also die Nadeln, außenseitig mit diesem Schichtsystem 9 belegt sein. Auch dies ist im Hinblick auf die zu erzielenden Isolationseigenschaften, tribologischen Eigenschaften wie auch die Verschleißfestigkeit vorteilhaft.

Wenngleich Figur 2 die Ausbildung eines Schichtsystems 9 umfassend die drei beschriebenen Schichten zeigt, ist es selbstverständlich auch möglich, beispielsweise nur die Isolationsschicht 11 aufzubringen, mithin also unmittelbar auf dem metallenen Körper des jeweiligen Bauteils abzuscheiden. Hiermit ist zum einen die hervorragende Isolation gegeben, zum anderen kann natürlich auch bereits über die Isolationsschicht, beispielsweise in Form der Oxidkeramikschicht, eine extrem hohe Verschleißfestigkeit wie auch gute tribologische Eigenschaften erreicht werden. In diesem Fall wäre also nur ein Einschichtsystem gegeben. Auch die Ausbildung eines Zweischichtsystems ist denkbar, beispielsweise durch zusätzliches Abscheiden der Haftvermittlerschicht 10 oder der tribologischen Deckschicht 12. Ob nun ein Einschichtsystem, ein Zweischichtsystem oder ein Dreischichtsystem ausgebildet wird, hängt letztlich vom konkreten Einsatzzweck des Wälzlagers 1 ab.

Wenngleich Figur 1 ein Radiallager zeigt, ist es selbstverständlich auch denkbar, das Wälzlager als Axiallager auszuführen. Des Weiteren ist die Erfindung natürlich nicht auf ein Nadellager beschränkt, vielmehr kann letztlich jedweder Wälzlagertyp erfindungsgemäß ausgerüstet werden.

### Bezugszahlenliste

- 1: Wälzlager
- 2: Außenring
- 3: Innenring
- 4: Wälzkörper
- 5: Käfig
- 6: Wälzkörperlaufbahn
- 7: Wälzkörperlaufbahn
- 8: metallener Körper
- 9: Schichtsystem
- 10: Haftvermittlerschicht
- 11: Isolationsschicht
- 12: Deckschicht

## Patentansprüche

1. Wälzlager, umfassend einen metallenen Außenring und einen metallenen Innenring mit jeweiligen Wälzkörperlaufbahnen, sowie mehrere auf diesen Wälzkörperlaufbahnen wälzende metallene Wälzkörper, wobei am Außenring (2) und/oder am Innenring (3) laufbahnseitig und/oder an den Wälzkörpern (4) eine elektrische Isolationsschicht (11) aus einer Oxidkeramik vorgesehen ist, **dadurch gekennzeichnet, dass** eine Haftvermittlerschicht (10) zwischen dem metallenen Körper (8) des Außenrings (2), des Innenrings (3) und/oder des Wälzkörpers (4) und der Isolationsschicht (11) vorgesehen ist und dass die Haftvermittlerschicht (10) aus einem Metall, einem Metallkarbid, einem Metallnitrid, einem Metallborid oder einem Metallsilizid besteht.

2. Wälzlager nach Anspruch 1, **dadurch gekennzeichnet, dass** die Isolationsschicht (11) einen Widerstand von > 200MΩ aufweist.

3. Wälzlager nach einem der Ansprüche 1 oder 2, **dadurch gekennzeichnet, dass** die Isolationsschicht (11) aus Al₂O₃, SiO₂, TiO₂ oder ZrO gebildet ist.

4. Wälzlager nach einem der vorangehenden Ansprüche, **dadurch gekennzeichnet, dass** die Isolationsschicht (11) mit einer tribologischen Deckschicht (12) belegt ist.

5. Wälzlager nach Anspruch 4, **dadurch gekennzeichnet, dass** die Deckschicht (12) eine metallhaltige wasserstoffhaltige amorphe Kohlenstoffschicht, eine metallfreie wasserstoffhaltige amorphe Kohlenstoffschicht oder eine modifizierte wasserstoffhaltige amorphe Kohlenstoffschicht ist.

6. Wälzlager nach einem der vorangehenden Ansprüche, **dadurch gekennzeichnet, dass** die Schichtdicke der Isolationsschicht (11) ≤ 15µm, insbesondere ≤ 10µm ist, wobei bei Vorhandensein einer Haftvermittlerschicht (10) und/oder einer Deckschicht (12) die Gesamtschichtdicke ≤ 25µm, insbesondere ≤ 20µm ist.

7. Wälzlager nach einem der vorangehenden Ansprüche, **dadurch gekennzeichnet, dass** die Isolationsschicht (11), die Haftvermittlerschicht (10) und/oder die Deckschicht (12) in einem PVD- oder einem PACVD-Verfahren hergestellt sind.

## Claims

1. Anti-friction bearing, comprising a metallic outer ring and a metallic inner ring having respective rolling body raceways, and also a plurality of metallic rolling bodies rolling on said rolling body raceways, wherein an electrical insulation layer (11) made of an oxide ceramic is provided on the outer ring (2) and/or on the inner ring (3) on the raceway side and/or on the rolling bodies (4), **characterized in that** an adhesion-promoting layer (10) is provided between the metallic body (8) of the outer ring (2), of the inner ring (3) and/or of the rolling body (4) and the insulation layer (11), and **in that** the adhesion-promoting layer (10) consists of a metal, a metal carbide, a metal nitride, a metal boride or a metal silicide.

2. Anti-friction bearing according to Claim 1, **characterized in that** the insulation layer (11) has a resistance of > 200 MΩ.

3. Anti-friction bearing according to either of Claims 1 and 2, **characterized in that** the insulation layer (11) is formed from Al₂O₃, SiO₂, TiO₂ or ZrO.

4. Anti-friction bearing according to one of the preceding claims, **characterized in that** the insulation layer (11) is coated with a tribological cover layer (12).

5. Anti-friction bearing according to Claim 4, **characterized in that** the cover layer (12) is a metalliferous, hydrogenous, amorphous carbon layer, a metal-free, hydrogenous, amorphous carbon layer, or a modified, hydrogenous, amorphous carbon layer.

6. Anti-friction bearing according to one of the preceding claims, **characterized in that** the layer thickness of the insulation layer (11) is ≤ 15 µm, in particular ≤ 10 µm, the total layer thickness being ≤ 25 µm, in particular ≤ 20 µm, in the presence of an adhesion-promoting layer (10) and/or a cover layer (12).

7. Anti-friction bearing according to one of the preceding claims, **characterized in that** the insulation layer (11), the adhesion-promoting layer (10) and/or the cover layer (12) are produced in a PVD or a PACVD process.

## Revendications

1. Palier à roulement, comprenant une bague extérieure métallique et une bague intérieure métallique avec des glissières pour corps de roulement respectives, ainsi que plusieurs corps de roulement métalliques roulant sur ces glissières pour corps de roulement, une couche d'isolation (11) électrique en céramique oxydée étant prévue sur la bague extérieure (2) et/ou sur la bague intérieure (3) côté glissière et/ou sur les corps de roulement (4), **caractérisé en ce qu'**une couche d'agent adhésif (10) est prévue entre le corps (8) métallique de la bague extérieure (2), de la bague intérieure (3) et/ou du corps de roulement (4) et de la couche d'isolation (11), et **en ce que** la couche d'agent adhésif (10) se compose de métal, de carbure métallique, de nitrure métallique, de borure métallique ou de siliciure métallique.

2. Palier à roulement selon la revendication 1, **caractérisé en ce que** la couche d'isolation (11) présente une résistance de > 200 MΩ.

3. Palier à roulement selon l'une des revendications 1 ou 2, **caractérisé en ce que** la couche d'isolation (11) est formée de Al₂O₃, SiO₂, TiO₂ ou ZrO.

4. Palier à roulement selon l'une des revendications précédentes, **caractérisé en ce que** la couche d'isolation (11) est revêtue d'une couche de revêtement (12) tribologique.

5. Palier à roulement selon la revendication 4, **caractérisé en ce que** la couche de revêtement (12) est une couche de carbone amorphe contenant de l'hydrogène contenant du métal, une couche de carbone amorphe contenant de l'hydrogène exempte de métal ou une couche de carbone amorphe contenant de l'hydrogène modifié.

6. Palier à roulement selon l'une des revendications précédentes, **caractérisé en ce que** l'épaisseur de couche de la couche d'isolation (11) ≤ 15 µm, en particulier ≤ 10 µm, l'épaisseur de couche totale étant, en présence d'une couche d'agent adhésif (10) et/ou d'une couche de revêtement (12), ≤ 25 µm, en particulier ≤ 20 µm.

7. Palier à roulement selon l'une des revendications précédentes, **caractérisé en ce que** la couche d'isolation (11), la couche d'agent adhésif (10) et/ou la couche de revêtement (12) sont fabriquées selon un procédé PVD ou PACVD.
